# EUROPEAN PATENT SPECIFICATION

(11) **EP 1 815 961 B1**
(45) Date of publication and mention of the grant of the patent: **09.12.2015**
(21) Application number: 07101844.4
(22) Date of filing: 06.02.2007
(51) Int. Cl.: B29C 35/16, B29C 47/88, B29D 30/52

(54) **Method for producing treads**
Verfahren zur Herstellung von Laufflächen
Procédé de fabrication de chapes

(30) Priority: 06.02.2006 IT TO20060078
(43) Date of publication of application: 08.08.2007
(73) Proprietor: Bridgestone Corporation, Chuo-ku Tokyo 104-8340 (JP)
(72) Inventor: Marangoni, Giampaolo, 00176 Roma (IT); Rettura, Dennis, 00043 Ciampino (IT)
(74) Representative: Bergadano, Mirko

(56) References cited:
- EP-A- 1 612 034
- DE-C1- 4 211 669
- US-A- 1 682 876
- US-A- 4 647 328

## Description

The present invention relates to a method of producing treads.

Here and hereinafter, the term "tread" refers to the whole defined by the so-called "cap" portion, which in use contacts the ground, and by the so-called "undertread" portion, which in use is fixed to the tyre carcass. The two portions, being designed for different purposes, are made from two different mixes, and are co-extruded to obtain a one-piece tread.

Once co-extruded, the tread is fitted to the carcass at the tyre building stage. And, to ensure the tread adheres properly to the carcass (hereinafter referred to as "tackiness", the term most commonly used in the tyre industry), the free surface of the undertread is coated with a composition comprising an adhesive mix dissolved in organic solvent, usually petrol.

For ecological and industrial safety reasons, recent directives at European level have drastically reduced the use of organic solvents in the tyre industry, thus making it necessary for tyre manufacturers to devise alternative ways of ensuring tackiness of the undertread.

The solution to the problem has not been easy, mainly on account of the adhesive mixes suitable for the purpose only being dissolvable in the organic solvents which use is now limited.

A strong demand therefore exists for a method of producing treads which can be fitted to tyre carcasses with the right degree of tackiness, but which at the same time conforms with recent European restrictions governing the use of organic solvents.

Surprisingly, cooling the newly-extruded tread according to given parameters has been found to produce a highly tacky product, in addition to improved porosity and scorch time characteristics.

A method of producing a tacky tread is diclosed in DE 42 11 669 C1 wherein the cooling of the tread is realized by a drum filled with liquid nitrogen.

It is an object of the present invention to provide a method of producing treads as claimed in claim 1.

The following are purely non-limiting examples, for a clear understanding of the invention.

### EXAMPLES

Two mixes, one for the cap and one for the undertread, were prepared as and with the compositions described below.

The two mixes were then co-extruded to form the tread, and cooled in accordance with the teachings of the present invention.

Four types of treads (A, B, C, D) were produced using the method according to the present invention. More specifically, each of the four treads was produced by modifying the extrusion speed, the cooling rate and the cooling ΔT parameters; and, for each tread A, B, C, D, a comparison tread (Ac, Bc, Cc, Dc) was produced under the same conditions, but without the cooling step.

### - Cap preparation -

### First mixing step

A 237-270-litre tangential mixer was loaded with the polymer base, carbon black, silica, silane agent, zinc oxide, stearic acid, and antioxidants to a fill factor of 66-75%. The mixer was operated at 30-60 rpm speed, and the resulting mix unloaded at a temperature of 140-160°C.

### Second mixing step

The mix from the first mixing step was worked again in the mixer operating at 40-60 rpm speed, and was unloaded at a temperature of 130-150°C.

### Third mixing step

The curing system was added to the mix from the second step to a fill factor of 60-70%. The mixer was operated at 20-40 rpm speed, and the resulting mix unloaded at a temperature of 100-115°C.

The above process produces a mix with the composition shown in Table I, in which the individual component quantities are expressed in parts per hundred parts of polymer base (PHR).

**TABLE I**

| Component | PHR |
|---|---|
| SBR | 137.5* |
| Carbon black | 10 |
| Silica | 80 |
| Silane agent | 12 |
| Zinc oxide | 4 |
| Stearic acid | 2 |
| Sulphur | 1.8 |
| Accelerators | 1.8 |
| Antioxidants | 1.2 |
| Oil | 10 |

| | |
|---|---|
| * parts by weight of polymer with added oil | |

### - Undertread preparation -

### First mixing step

A 237-270-litre tangential mixer was loaded with natural rubber, carbon black, tackifier resin, zinc oxide, stearic acid, and antioxidants to a fill factor of 66-75%, and the resulting mix unloaded at a temperature of 160-170°C.

### Second mixing step

The curing system was added to the mix from the first mixing step to a fill factor of 60-70%. The mixer was operated at 20-40 rpm speed, and the resulting mix unloaded at a temperature of 100-115°C.

The above process produces a mix with the composition shown in Table II, in which the individual component quantities are expressed in parts per hundred parts of polymer base (PHR).

**TABLE II**

| Component | PHR |
|---|---|
| Natural rubber | 100 |
| Carbon black | 50 |
| Tackifier resin | 4 |
| Zinc oxide | 3 |
| Stearic acid | 3 |
| Sulphur | 3 |
| Accelerators | 2.3 |
| Antioxidants | 0.7 |

### Tread A

The cap and undertread were co-extruded at 30 metres/minute speed, and the tread issuing from the extruder was cooled by full immersion in water. The cooling step was characterized by a cap cooling rate of 20.03°C/second to produce a 66°C fall in temperature, and by an undertread cooling rate of 16.25°C/second to produce a 52°C fall in temperature.

Within the same time interval, the respective comparison tread Ac was cooled "spontaneously" (with no cooling step) at a cap cooling rate of 5°C/second to produce a 16°C fall in temperature, and at an undertread cooling rate of 0.94°C/second to produce a 3°C fall in temperature.

### Tread B

The cap and undertread were co-extruded at 13 metres/minute speed, and the tread issuing from the extruder was cooled by full immersion in water. The cooling step was characterized by a cap cooling rate of 8.13°C/second to produce a 60°C fall in temperature, and by an undertread cooling rate of 6.77°C/second to produce a 50°C fall in temperature.

Within the same time interval, the respective comparison tread Bc was cooled "spontaneously" (with no cooling step) at a cap cooling rate of 2.71°C/second to produce a 20°C fall in temperature, and at an undertread cooling rate of 0.68°C/second to produce a 5°C fall in temperature.

### Tread C

The cap and undertread were co-extruded at 13 metres/minute speed, and the tread issuing from the extruder was cooled by full immersion in water. The cooling step was characterized by a cap cooling rate of 7.18°C/second to produce a 53°C fall in temperature, and by an undertread cooling rate of 5.96°C/second to produce a 44°C fall in temperature.

Within the same time interval, the respective comparison tread Cc was cooled "spontaneously" (with no cooling step) at a cap cooling rate of 1.9°C/second to produce a 14°C fall in temperature, and at an undertread cooling rate of 0.54°C/second to produce a 4°C fall in temperature.

### Tread D

The cap and undertread were co-extruded at 12 metres/minute speed, and the tread issuing from the extruder was cooled by full immersion in water. The cooling step was characterized by a cap cooling rate of 6.38°C/second to produce a 51°C fall in temperature, and by an undertread cooling rate of 5°C/second to produce a 40°C fall in temperature.

Within the same time interval, the respective comparison tread Dc was cooled "spontaneously" (with no cooling step) at a cap cooling rate of 1.68°C/second to produce a 13.4°C fall in temperature, and at an undertread cooling rate of 0.63°C/second to produce a 5°C fall in temperature.

### Laboratory tests

Each tread A, B, C, D and each corresponding comparison tread Ac, Bc, Cc, Dc were tested to determine tackiness of the undertread and porosity and scorch time of the cap.

More specifically:
- tackiness was measured using a TOYOSEIKI-SEISAKUJO tester marketed by the trade name PICKMA-TACK; testing comprised applying a 500 ± 5g load steel cylinder on the undertread for 30 ± 2s, then lifting off the cylinder at a rate of 30 ± 2 mm a minute, and measuring the resistance expressed in grams;
- scorch time was measured in accordance with ASTM Standard D1646, and the values expressed in minutes;
- porosity was measured as the percentage difference between the density of a green cap specimen and the density of the same specimen cured. Density was measured using a Wallace electronic densimeter, with the specimen immersed in water and out of water.

Table III shows the laboratory test results of each tread.

**TABLE III**

| Tread | Tackiness (g) | Porosity (%) | Scorch time (m) |
|---|---|---|---|
| A | 900 | 0.8 | 11 |
| Ac | 350 | 2 | 10 |
| B | 950 | 1 | 11 |
| Bc | 400 | 3 | 10 |
| C | 950 | 0.8 | 11 |
| Cc | 350 | 2.7 | 10 |
| D | 850 | 0.8 | 11 |
| Dc | 330 | 2.7 | 10 |

The results in Table III show how the method according to the present invention produces tread plies with a high degree of tackiness, even without using known adhesive mixes.

Table III also shows the advantages of the treads according to the present invention in terms of porosity and scorch time.

Other advantages of the present invention are the potential increase in output at the extrusion stage, and the possibility of feeding defective, otherwise reject, treads back onto the production line. The cooling step, in fact, eliminates any problems involving premature curing.

## Claims

1. A method of producing treads, comprising, in succession, a co-extrusion step, in which the tread is co-extruded, and a cooling step, in which the extruded tread is cooled; said method being **characterized in that** said cooling step comprises total immersion of the tread in a cooling liquid and that the undertread is cooled by at least 35°C at an undertread cooling rate of at least 4°C per second; a time lapse of 15 seconds or less being allowed between said co-extrusion step and said cooling step; said cooling liquid being water.

2. A method of producing treads, as claimed in Claim 1, **characterized in that** said cooling step is performed at an undertread cooling rate of at least 5.5°C per second.

## Patentansprüche

1. Verfahren zur Herstellung von Laufflächen, umfassend, nacheinander, einen Co-Extrusionsschritt, in welchem die Lauffläche co-extrudiert wird, und einen Kühlschritt, in welchem die extrudierte Lauffläche gekühlt wird; wobei das Verfahren **dadurch gekennzeichnet ist, dass** der Kühlschritt ein vollständiges Eintauchen der Lauffläche in eine Kühlflüssigkeit umfasst, und dass der Basisgummi mit mindestens 35°C mit einer Basisgummi-Kühlrate von mindestens 4°C pro Sekunde gekühlt wird; wobei eine Zeitspanne von 15 Sekunden oder weniger erlaubt ist zwischen dem Co-Extrusionsschritt und dem Kühlschritt; wobei die Kühlflüssigkeit Wasser ist.

2. Verfahren zur Herstellung von Laufflächen gemäß Anspruch 1, **dadurch gekennzeichnet, dass** der Kühlschritt mit einer Basisgummi-Kühlrate von mindestens 5,5°C pro Sekunde ausgeführt wird.

## Revendications

1. Procédé de production de chapes, comprenant, successivement, une étape de coextrusion, dans laquelle la chape est coextrudée, et une étape de refroidissement, dans laquelle la chape extrudée est refroidie ; ledit procédé étant **caractérisé en ce que** ladite étape de refroidissement comprend l'immersion totale de la chape dans un liquide de refroidissement et que la sous-chape est refroidie par au moins 35°C à une vitesse de refroidissement de sous-chape d'au moins 4°C par seconde ; un laps de temps de 15 secondes ou moins étant autorisé entre ladite étape de coextrusion et ladite étape de refroidissement ; ledit liquide de refroidissement étant de l'eau.

2. Procédé de production de chapes, tel que revendiqué dans la revendication 1, **caractérisé en ce que** ladite étape de refroidissement est effectuée à une vitesse de refroidissement de sous-chape d'au moins 5,5°C par seconde.
